# EUROPEAN PATENT APPLICATION

(11) **EP 4 425 620 A1**
(43) Date of publication of application: **04.09.2024**
(21) Application number: 21962159.6
(22) Date of filing: 30.11.2021
(51) Int. Cl.: H01M 8/04089

(54) **AIR COMPRESSION DEVICE, AND FUEL CELL DEVICE COMPRISING SAME**

(30) Priority: 26.10.2021 CN 202111246053; 23.11.2021 CN 202111393573
(71) Applicant: Hydrowell (Taicang) Energy Technologies Co., Ltd., Suzhou, Jiangsu 215400 (CN)
(72) Inventor: LIU, Wei, Suzhou, Jiangsu 215400 (CN); ZHU, Mingming, Suzhou, Jiangsu 215400 (CN); ZENG, Qiang, Suzhou, Jiangsu 215400 (CN); WANG, Yanqing, Suzhou, Jiangsu 215400 (CN)
(74) Representative: Ström & Gulliksson AB
(86) International application number: PCT/CN2021/134209
(87) International publication number: WO 2023/070816

(57) **Abstract**

The present application provides an air compression device including a primary compression stage and a secondary compression stage. The secondary compression stage includes a secondary compressor and a turbo-expander, which are connected by a connection mechanism so that the secondary compressor rotates at the same angular speed as the turbo-expander. The primary compression stage includes a first compressor and a second compressor, which are driven by a motor. The present application also provides a fuel cell apparatus including the air compression device. It includes a filter, the air compression device, a humidifier, a dehumidifier and a fuel cell stack, which are pneumatically connected. Air passes through the filter into the air compression device, where it is accelerated and pressurized. After that, it passes through the humidifier into the fuel cell stack. Exhaust air produced by a reaction taking place in the fuel cell stack passes through the dehumidifier into the turbo-expander in the air compression device.

## Description

### Field of the Invention

The present application relates to the field of fuel cells and, in particular, to an air compression device and a fuel cell apparatus including the air compression device.

### Description of the Prior art

Proton-exchange membrane fuel cell systems are efficient and clean new energy power systems, in which an air compressor compresses air to a high pressure, and the compressed air is then fed to a cathode of a fuel cell. Oxygen in the air undergoes an electrochemical reaction with hydrogen in an anode of the fuel cell, which produces electricity and water. In this process, except for some heat that may be carried in extra air into the atmosphere, there are no other products that pollute the environment. Therefore, fuel cell power systems are very clean and environmentally friendly, and hydrogen can be produced using many existing methods, as a clean and renewable energy source. At present, countries around the world are vigorously engaged in the development and promotion of hydrogen fuel cell power systems.

Air compressors specially designed for fuel cells are used as crucial components of hydrogen fuel cell power systems. Such an air compressor functions to provide a fuel cell with compressed air at a pressure and flow rate, as required by a chemical reaction running in the fuel cell that consumes oxygen in the air. Currently, most air compressors for fuel cells available on the market are single-stage and two-stage compressors. Single-stage compression involves driving a single impeller with a single motor, while two-stage compression involves driving two impellers with a single motor. One of the impellers serves as a low-pressure stage, and the other as a high-pressure stage, which is connected in series with the low-pressure stage. After being compressed in the low-pressure stage, air undergoes secondary compression in the high-pressure stage. Therefore, compared with single-stage ones, two-stage compressors can provide compressed air at a higher pressure and flow rate and are applicable to a wider power range of fuel cells. At present, single-stage compression is mostly used in low-power fuel cell stacks, and two-stage compression is mostly used in medium- and high-power fuel cell stacks.

Oxygen in compressed air fed into a fuel cell is only partially consumed in a reaction that takes place therein, and the remaining compressed air is discharged into the atmosphere. As this part of the compressed air is highly pressurized, directly discharging it into the atmosphere would lead to a waste of the energy that it carries.

In order to recover energy from such high-pressure exhaust air from fuel cells, there have been developed air compressors equipped with a turbo-expander. Specifically, such an air compressor is combined with a turbo-expander and a single motor. The turbo-expander can recover energy from exhaust air, which can be reused to assist the motor in driving the compressor. In this way, the motor is allowed to operate at a lower power level, which can remarkably enhance efficiency of the fuel cell system. However, as the turbo-expander takes up the space of one compression stage, such air compressors equipped with a turbo-expander have to employ the single-stage architecture, or bear stability would be compromised otherwise. Moreover, since most existing high-speed motors can only provide a rotating speed of up to 120,000 rpm, such single-stage compressors equipped with a turbo-expander can only cover a limited range of power and is not suitable for use with high-power fuel cell stacks.

Currently, fuel cells are mostly used in buses, logistics vehicles, trucks and other light commercial vehicles. Compared with these, heavy commercial vehicles, such as lorries, dump trucks and heavy-duty machinery, require much higher stack power and accordingly the use of air compressors that can provide a much higher pressure and flow rate. Existing single-stage compressors, two-stage compressors and expander-equipped single-stage compressors cannot fully address the current applications. Increasing stack power by increasing motor power and compressor size is faced with many challenges, such as inability to address both light-load and heavy-load conditions, excessive motor power, excessive compressor power consumption and an insufficient compressor surge margin. Therefore, ultra-high-power air compressors are very difficult to promote, expensive, less competitive and less feasible.

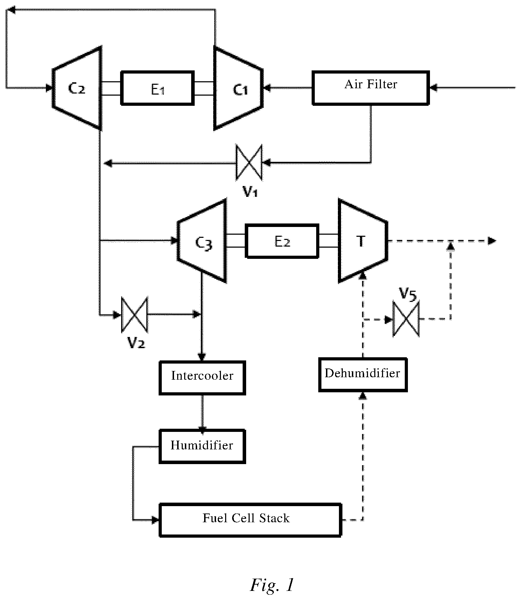

In order to overcome the above-described problem, it has also been proposed to connect a two-stage compressor in series with an expander-equipped single-stage compressor. Accordingly, there are totally three compression stages and one turbo-expander stage. The three compression stages are used to provide compressed air at a high pressure ratio and a large flow rate, as required by a high-power fuel cell stack. The turbo-expander is used to recover energy from exhaust air of the fuel cell stack, thereby reducing electric power consumption of the air compressor and increasing its power density. However, this solution requires the use of two motors. As shown in Fig. 1, a first one of the motors drives first and second ones C1, C2 of the compressors, and a second one of the motors drives a third one C3 of the compressors. The third compressor C3 serves as a secondary compressor. The energy recovered by the turbo-expander T from the exhaust air is used to assist the second motor in driving the third compressor C3. However, such a solution overall requires at least two motors and an associated control system. Consequently, it is very complex in terms of circuit design and control logic design, leading to considerably high cost. Moreover, exhaust air energy recovery is possible only when the second motor is rotating during operation. In the situation where normal operation of the second motor fails, limited by the second motor, the turbo-expander T will be not able to actuate the third compressor C3, making it impossible to recover energy from the exhaust air. In practice, under a heavy-load operating condition of the fuel cell stack, the three compressors will also operate in a heavy-load condition, which requires the second motor to operate at a high speed. In this case, exhaust air will be discharged with more energy and can be received with higher efficiency. However, under a light-load operating condition of the fuel cell, it will be unnecessary for the third compressor C3 to operate in a heavy-load condition. In this case, the second motor is allowed to rotate in a lower speed, leading to less energy in the exhaust air and hence lower utilization thereof. If the control system is designed to be able to control the rotating speed of the second motor as a function of the loading condition of the fuel cell stack, its complexity and cost would be additionally increased. Further, if the exhaust air discharged from the fuel cell stack contains moisture, the reliability of the second motor may be affected if the moisture remains untreated, and the complexity of the control system would be further increased if it is designed to be able to treat the moisture.

Therefore, those skilled in the art are directing their effort toward developing an air compression device and a fuel cell apparatus including the air compression device, which can overcome the above-described problems with the prior art.

### Summary of the Invention

To this end, the present application provides:
an air compression device comprising a secondary compression stage, the secondary compression stage comprising a secondary compressor and a turbo-expander, wherein
the secondary compressor is connected to the turbo-expander by a connection mechanism.

Optionally, the connection mechanism may be configured to cause the secondary compressor to rotate at the same angular speed as the turbo-expander.

Optionally, the connection mechanism may be a rotating shaft, and the secondary compressor may be fixedly connected to the turbo-expander by the rotating shaft.

Optionally, the turbo-expander may be configured to receive exhaust air and to be driven by the exhaust air.

Optionally, the air compression device may further comprise a primary compression stage pneumatically connected to the secondary compression stage.

Optionally, the primary compression stage may comprise a first compressor and a second compressor, which are driven by a first motor.

Optionally, an air outlet of the first compressor may be pneumatically connected to an air inlet of the second compressor, and an air outlet of the second compressor may be pneumatically connected to an air inlet of the secondary compression stage.

Optionally, an air inlet of the first compressor may be pneumatically connected to an air inlet of the second compressor, and an air outlet of the first compressor and an air outlet of the second compressor may be both pneumatically connected to an air inlet of the secondary compression stage.

Optionally, the primary compression stage may comprise a first compressor, a second compressor, a third compressor and a fourth compressor, the first compressor and the second compressor driven by a first motor, the third compressor and the fourth compressor driven by a second motor.

Optionally, an air outlet of the first compressor may be pneumatically connected to an air inlet of the second compressor, and an air outlet of the third compressor may be pneumatically connected to an air inlet of the fourth compressor.

Optionally, an air outlet of the second compressor and an air outlet of the fourth compressor may be both pneumatically connected to an air inlet of the secondary compression stage.

Optionally, an air outlet of the secondary compressor may be pneumatically connected to an intercooler.

Optionally, an air outlet of the second compressor may be pneumatically connected to an intercooler.

The present application further provides a fuel cell apparatus comprising a filter, the air compression device, a humidifier, a dehumidifier and a fuel cell stack, wherein the filter, the air compression device, the humidifier, the dehumidifier and the fuel cell stack are pneumatically connected; air passes through the filter into the air compression device, where it is accelerated and pressurized, followed by passage through the humidifier into the fuel cell stack; and exhaust air produced by a reaction taking place in the fuel cell stack passes through the dehumidifier into the turbo-expander in the air compression device.

Optionally, the air compression device may further comprise a primary compression stage pneumatically connected to the secondary compression stage.

Optionally, the primary compression stage may comprise a first compressor and a second compressor, which are driven by a first motor.

Optionally, an air outlet of the first compressor may be pneumatically connected to an air inlet of the second compressor, and an air outlet of the second compressor may be pneumatically connected to an air inlet of the secondary compression stage.

Optionally, an air inlet of the first compressor may be pneumatically connected to an air inlet of the second compressor, and an air outlet of the first compressor and an air outlet of the second compressor may be both pneumatically connected to an air inlet of the secondary compression stage.

Optionally, the primary compression stage may comprise a first compressor, a second compressor, a third compressor and a fourth compressor, the first compressor and the second compressor driven by a first motor, the third compressor and the fourth compressor driven by a second motor.

Optionally, an air outlet of the first compressor may be pneumatically connected to an air inlet of the second compressor, wherein an air outlet of the third compressor is pneumatically connected to an air inlet of the fourth compressor, and an air outlet of the second compressor and an air outlet of the fourth compressor are both pneumatically connected to an air inlet of the secondary compression stage.

Compared with the prior art, the present application offers at least the benefits as follows:
1. It allows incorporation of multiple compressors, which can be connected in series and/or parallel to address the need of a high-power fuel cell stack for compressed air supplied at a higher pressure ratio and a larger flow rate under heavy-load conditions.
2. According to the present application, the compressor in the secondary compression stage is fixedly connected to the turbo-expander, and directly driven, by the rotating shaft, instead of by a motor. Therefore, an associated control system is allowed to be simpler, smaller in size and lower in cost.
3. Despite the absence of a second motor and associated control system, the present application still allows the secondary compressor to rotate at a low speed under light-load conditions of the fuel cell stack and at a high speed under heavy-load conditions thereof. This enables dynamic control of the secondary compressor.
3. Since the secondary compression stage is directly driven by the more efficient turbo-expander, instead of by a motor, energy recovery can be enhanced, reducing the overall power consumption of the air compression device.
4. When multiple stages of compressors are connected in series, a high pressure ratio or large flow rate can be achieved even when each compressor is operating at a relatively low rotating speed. This can avoid a compressor surge under light-load conditions, thereby allowing easier development of air bearings, motors, controllers and other supporting components and thereby effectively reducing the overall cost of the product.
5. As no motor is arranged between the turbo-expander and the secondary compression stage, the problem that vapor contained in exhaust air discharged from the fuel cell stack may affect the reliability of such a motor can be circumvented, additionally enhancing system reliability and reducing development complexity.

Below, the concept, structural details and resulting effects of the present application will be further described with reference to the accompanying drawings to provide a full understanding of the objects, features and effects of the application.

### Brief Description of the Drawings

Fig. 1 is a schematic illustration of a conventional structure.
Fig. 2 schematically illustrates connections in a structure according to an embodiment of the present application.
Fig. 3 schematically illustrates connections in a structure according to an embodiment of the present application.
Fig. 4 schematically illustrates connections in a structure according to an embodiment of the present application.
Fig. 5 schematically illustrates connections in a structure according to an embodiment of the present application.
Fig. 6 schematically illustrates connections in a structure according to an embodiment of the present application.

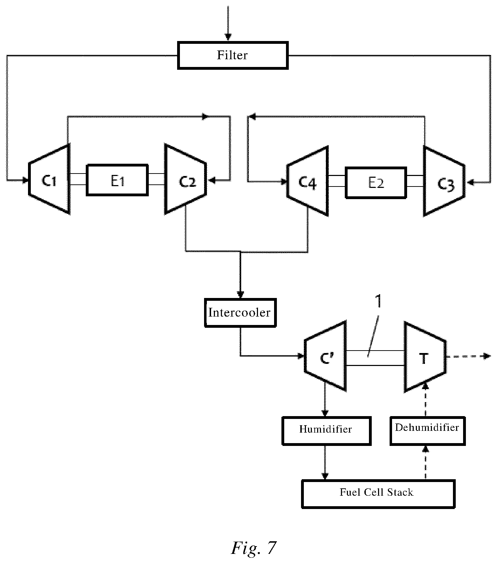

Fig. 7 schematically illustrates connections in a structure according to an embodiment of the present application.

### Detailed Description of the Preferred Embodiments

A few preferred embodiments of the present invention will be described more fully hereinafter with reference to the accompanying drawings so that techniques thereof will become more apparent and more readily understood. The invention can be embodied in various different forms and its scope is in no way limited to the embodiments discussed herein.

The connecting lines and letters in the annexed figures denote as follows:
solid arrow lines, flow path of air or compressed air;
dashed arrow lines, flow path of exhaust air;
C1 = Compressor 1 = first compressor (any additional compressor is incremented);
E1 = Engine 1 = first motor (any additional motor is incremented); and
T = turbine = turbo-expander.

### Example 1

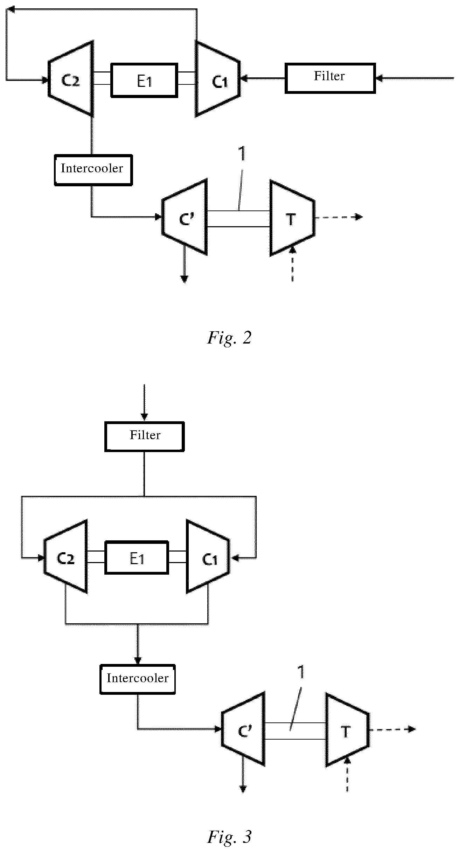

Fig. 2 schematically illustrates connections in a structure according to a first embodiment of the present application.

In this embodiment, there is provided an air compression device including a primary compression stage and a secondary compression stage. The primary compression stage produces compressed air by driving a compressor with a motor, which is then supplied to a working mechanism (e.g., a fuel cell stack). The secondary compression stage assists in producing the compressed air, by recovering energy in exhaust air produced by the working mechanism.

Specifically, in this embodiment, the secondary compression stage includes a secondary compressor C' and a turbo-expander T. The secondary compressor C' is connected to the turbo-expander T by a connection mechanism 1. In this embodiment, the connection mechanism 1 is preferred to be a rotating shaft. The secondary compressor C' and the turbo-expander T are respectively fixedly connected to opposite ends of the rotating shaft so that the secondary compressor C' and the turbo-expander T rotate at the same angular speed. Thus, the turbo-expander T is configured to drive the secondary compressor C'. In other similar embodiments, the connection mechanism 1 may be structured and connected in a different way, as long as the turbo-expander T can actuate the secondary compressor C'. In this embodiment, the secondary compression stage operates by receiving exhaust air produced by a reaction occurring in the working mechanism (e.g., a fuel cell stack) by the turbo-expander T, which drives the turbo-expander T to rotate. As the turbo-expander T is fixedly connected to the secondary compressor C' by the rotating shaft, the secondary compression stage C' is driven by the turbo-expander T to rotate at the same angular speed to accelerate and pressurize air introduced into the secondary compressor C'. In this way, the secondary compression stage can recover energy from the exhaust air, thereby enhancing operating efficiency of the air compression device. Moreover, the secondary compression stage C' is directly driven by the turbo-expander T, instead of by a motor arranged in the secondary compression stage. This dispenses with the need to provide a control system associated with the motor. As such, the air compression device overall has a simple structure, can be assembled and commissioned at low cost, and exhibits higher stability.

In this embodiment, the primary compression stage includes a first compressor and C1, a second compressor C2 and a first motor E1. Specifically, the first compressor C1 and the second compressor C2 are driven by the first motor E1. An air outlet of the first compressor C1 is pneumatically connected to an air inlet of the second compressor C2, and an air outlet of the second compressor C2 is pneumatically connected to an air inlet of the secondary compression stage. Specifically, in this embodiment, the air outlet of the second compressor C2 is pneumatically connected to the secondary compressor C' in the secondary compression stage. The first compressor C1 is used to receive air and initially compress it to produce compressed air. The compressed air then successively flows through the second compressor C2 and the secondary compressor C' to undergo secondary compression and tertiary compression therein, respectively, before it enters the working mechanism. The first compressor C1, the second compressor C2 and the secondary compressor C' together form a three-stage serial air compression structure.

Preferably, air passes through a filter to remove dust and other impurities, before it enters the first compressor C1, and an intercooler is disposed between the air outlet of the second compressor C2 and the air inlet of the secondary compression stage. That is, the air outlet of the second compressor C2 is pneumatically connected to the intercooler. With this arrangement, the temperature of the compressed air that enters the secondary compression stage can be lowered. Optionally, an intercooler may be provided downstream of the secondary compressor C'. That is, an air outlet of the secondary compressor C' may be pneumatically connected to the intercooler. With this arrangement, the temperature of the compressed air that enters the working mechanism can be lowered.

In this embodiment, although the secondary compression stage is absent of a motor and associated control system, as the amount of the exhaust air from the working mechanism (e.g., fuel cell stack) varies with the loading condition (more exhaust air flows at a high rate under heavy-load conditions; and less exhaust air flows at a low rate under light-load conditions), the turbo-expander T that is driven by the exhaust air can rotate at a variable speed. As a result, the secondary compressor rotates at a high speed under heavy-load conditions and at a low speed under light-load conditions. In this way, dynamic control of the secondary compressor can be achieved without a control system.

### Example 2

Fig. 3 schematically illustrates connections in an air compression device according to a second embodiment. This embodiment includes the same secondary compression stage as previously described in connection with the first embodiment and a primary compression stage also including a first compressor C1, a second compressor C2 and a first motor E1. It differs from the first embodiment in that the two compressors in the primary compression stage are connected in parallel in this embodiment. Specifically, an air inlet of the first compressor C1 is pneumatically connected to an air inlet of the second compressor C2, and an air outlet of the first compressor C1 and an air outlet of the second compressor C2 are both pneumatically connected to an air inlet of the secondary compression stage. Air is compressed separately in the first compressor C1 and the second compressor C2, and the compressed air converges and flows into a secondary compressor C'. Compared with the first embodiment, this embodiment enables an even higher flow rate of compressed air at given power consumption and can be more advantageously used in applications requiring a large flow rate and low pressure ratio.

### Example 3

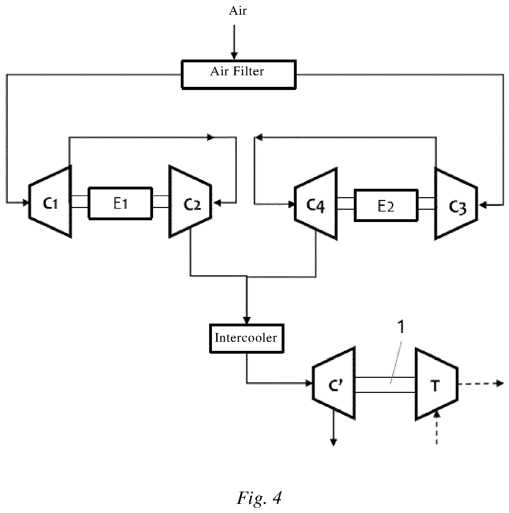

Fig. 4 schematically illustrates connections in an air compression device according to a third embodiment. This embodiment includes the same secondary compression stage as previously described in connection with the first embodiment and a primary compression stage including four compressors, namely, a first compressor C1, a second compressor C2, a third compressor C3 and a fourth compressor C4. The first compressor C1 and the second compressor C2 are driven by a first motor E1, and the third compressor C3 and the fourth compressor C4 are driven by a second motor E2. The four compressors in this embodiment form two parallel-connected sets. Specifically, an air outlet of the first compressor C1 is pneumatically connected to an air inlet of the second compressor C2, and an air outlet of the third compressor C3 is pneumatically connected to an air inlet of the fourth compressor C4. An air outlet of the second compressor C2 and an outlet of the fourth compressor C4 are both pneumatically connected to an air inlet of the secondary compression stage. In this way, the first compressor C1 is connected in series with the second compressor C2, and the third compressor C3 is connected in series with the fourth compressor C4. Moreover, the two series-connected sets are connected in parallel. In this embodiment, the sets of series-connected compressors can each supply compressed air with a greater pressure ratio and are further connected in parallel to provide compressed air at an even greater flow rate. Therefore, they can provide compressed air at both a large flow rate and a high pressure ratio. In addition, the same secondary compression stage as previously described in connection with the first embodiment is included to recover energy from exhaust air to enhance operating efficiency of the air compression device.

In other similar embodiments, compressed air can be produced at an even higher pressure ratio by connecting more (e.g., three, four, five or more) compressors in series. Moreover, compressed air can be produced at an even higher flow rate by connecting more (e.g., three, four, five or more) series-connected sets in parallel.

### Example 4

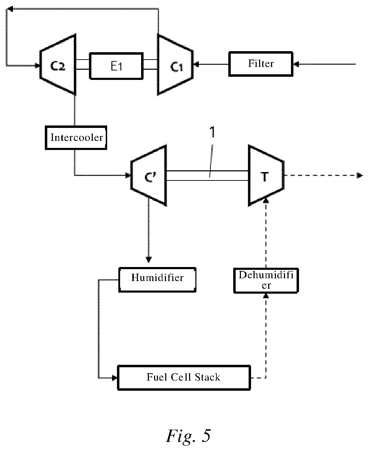

Fig. 5 schematically illustrates connections in a fuel cell apparatus according to a fourth embodiment. The fuel cell apparatus includes a filter, an air compression device, a humidifier, a dehumidifier and a fuel cell stack, which are all connected by air pipelines. After passing through the filter, air enters the air compression device, where it is accelerated and pressurized. After that, it is further appropriately humidified in the humidifier and finally flows into the fuel cell stack. In the fuel cell apparatus of Fig. 5, the air compression device is implemented as an air compression device as defined above in connection with the first embodiment. It has a primary compression stage including first compressor and C1, a second compressor C2 and a first motor E1. The first compressor C1 and the second compressor C2 are driven by the first motor E1. An air outlet of the first compressor C1 is pneumatically connected to an air inlet of the second compressor C2, and an air outlet of the second compressor C2 is pneumatically connected to an air inlet of a secondary compression stage. The secondary compression stage includes a secondary compressor C' and a turbo-expander T, which are connected to each other by a connection mechanism so that they can rotate in synchronization at the same angular speed. The connection mechanism is preferred to be a rotating shaft 1. The secondary compressor C' and the turbo-expander T are respectively fixedly connected to opposite ends of the rotating shaft 1. In this way, in the air compression device of this embodiment, the first compressor C1, the second compressor C2 and the secondary compressor C' together form a three-stage serial structure. The first compressor C1 is used to receive air and initially compress it to produce compressed air. The compressed air then successively flows through the second compressor C2 and the secondary compressor C' to undergo secondary compression and tertiary compression therein, respectively, before it enters the fuel cell stack. The turbo-expander T receives exhaust air produced by a reaction taking place in the fuel cell stack, and the secondary compressor C' is driven by the turbo-expander T to rotate at the same angular speed to accelerate and pressurize the air that enters the secondary compressor C, enhancing energy utilization of the fuel cell apparatus. Optionally, the dehumidifier may be disposed between an air outlet of the fuel cell stack and an air inlet of the turbo-expander T and configured for partial removal of moisture.

In this embodiment, an intercooler may be optionally provided between the air outlet of the second compressor C2 and the air inlet of the secondary compression stage. That is, the air outlet of the second compressor C2 may be pneumatically connected to the intercooler. With this arrangement, the temperature of the compressed air that enters the secondary compression stage can be lowered. Optionally, an intercooler may be provided downstream of the secondary compressor C'. That is, an air outlet of the secondary compressor C' may be pneumatically connected to the intercooler. With this arrangement, the temperature of the compressed air that enters the working mechanism can be lowered.

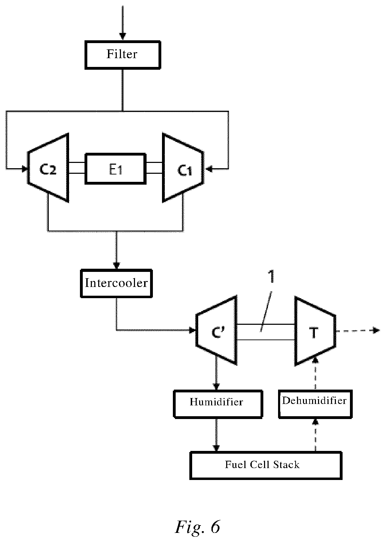

In embodiments similar to this embodiment, optionally, the air compression device in the fuel cell apparatus may also be implemented as an air compression device as defined above in connection with the second embodiment, as shown in Fig. 6. That is, the primary compression stage of the air compression device may include a first compressor C1 and a second compressor C2, which are driven by a first motor E1. An air inlet of the first compressor C1 may be pneumatically connected to an air inlet of the second compressor C2, and an air outlet of the first compressor C1 and an air outlet of the second compressor C2 may be both pneumatically connected to an air inlet of the secondary compressor C' in the secondary compression stage. In this way, the first compressor C1 and the second compressor C2 are connected in parallel. This allows a higher flow rate of air that enters the fuel cell stack.

In embodiments similar to this embodiment, optionally, the air compression device in the fuel cell apparatus may also be implemented as an air compression device as defined above in connection with the third embodiment, as shown in Fig. 6. That is, the primary compression stage of the air compression device may include a first compressor C1, a second compressor C2, a third compressor C3 and a fourth compressor C4. The first compressor C1 and the second compressor C2 may be driven by a first motor E1, and the third compressor C3 and the fourth compressor C4 may be driven by a second motor E2. An air outlet of the first compressor C1 may be pneumatically connected to an air inlet of the second compressor C2, and an air outlet of the third compressor C3 may be pneumatically connected to an air inlet of the fourth compressor C4. An air outlet of the second compressor C2 and an air outlet of the fourth compressor C4 may be both pneumatically connected to an air inlet of a secondary compressor C' in a secondary compression stage. That is, in this embodiment, multiple two-stage serial compression structures may optionally be connected in parallel. This enables supply of compressed air both at a large flow rate and at a high pressure ratio. Moreover, the secondary compression stage is included to recover energy from exhaust air for reuse, enhancing operating efficiency of the air compression device. If desired, in the air compression device of this embodiment, more (e.g., three, four, five or more) compressors may be connected in series to produce compressed air at an even higher pressure ratio. Moreover, more (e.g., three, four, five or more) series-connected sets may be connected in parallel to produce compressed air at an even higher flow rate.

Preferred specific embodiments of the present invention have been described in detail above. It is to be understood that those of ordinary skill in the art can make various modifications and changes based on the concept of the present invention without exerting any creative effort. Accordingly, all variant embodiments that can be obtained by those skilled in the art by logical analysis, inference or limited experimentation in accordance with the concept of the present invention on the basis of the prior art are intended to fall within the protection scope as defined by the claims.

## Claims

1. An air compression device comprising a secondary compression stage, the secondary compression stage comprising a secondary compressor and a turbo-expander, wherein the secondary compressor is connected to the turbo-expander by a connection mechanism.

2. The air compression device of claim 1, wherein the connection mechanism is configured to cause the secondary compressor to rotate at the same angular speed as the turbo-expander.

3. The air compression device of claim 2, wherein the connection mechanism is a rotating shaft, and the secondary compressor is fixedly connected to the turbo-expander by the rotating shaft.

4. The air compression device of claim 1, wherein the turbo-expander is configured to receive exhaust air and to be driven by the exhaust air.

5. The air compression device of claim 1, further comprising a primary compression stage pneumatically connected to the secondary compression stage.

6. The air compression device of claim 5, wherein the primary compression stage comprises a first compressor and a second compressor, which are driven by a first motor.

7. The air compression device of claim 6, wherein an air outlet of the first compressor is pneumatically connected to an air inlet of the second compressor, and an air outlet of the second compressor is pneumatically connected to an air inlet of the secondary compression stage.

8. The air compression device of claim 6, wherein an air inlet of the first compressor is pneumatically connected to an air inlet of the second compressor, and an air outlet of the first compressor and an air outlet of the second compressor are both pneumatically connected to an air inlet of the secondary compression stage.

9. The air compression device of claim 5, wherein the primary compression stage comprises a first compressor, a second compressor, a third compressor and a fourth compressor, the first compressor and the second compressor driven by a first motor, the third compressor and the fourth compressor driven by a second motor.

10. The air compression device of claim 9, wherein an air outlet of the first compressor is pneumatically connected to an air inlet of the second compressor, and an air outlet of the third compressor is pneumatically connected to an air inlet of the fourth compressor.

11. The air compression device of claim 10, wherein an air outlet of the second compressor and an air outlet of the fourth compressor are both pneumatically connected to an air inlet of the secondary compression stage.

12. The air compression device of claim 1, wherein an air outlet of the secondary compressor is pneumatically connected to an intercooler.

13. The air compression device of claim 6, wherein an air outlet of the second compressor is pneumatically connected to an intercooler.

14. A fuel cell apparatus comprising a filter, an air compression device, a humidifier, a dehumidifier and a fuel cell stack, wherein the filter, the air compression device, the humidifier, the dehumidifier and the fuel cell stack are pneumatically connected; the air compression device comprises the air compression device of claim 1; air passes through the filter into the air compression device, where it is accelerated and pressurized, followed by passage through the humidifier into the fuel cell stack; and exhaust air produced by a reaction taking place in the fuel cell stack passes through the dehumidifier into the turbo-expander in the air compression device.

15. The fuel cell apparatus of claim 14, wherein the air compression device further comprises a primary compression stage pneumatically connected to the secondary compression stage.

16. The fuel cell apparatus of claim 15, wherein the primary compression stage comprises a first compressor and a second compressor, which are driven by a first motor.

17. The fuel cell apparatus of claim 16, wherein an air outlet of the first compressor is pneumatically connected to an air inlet of the second compressor, and an air outlet of the second compressor is pneumatically connected to an air inlet of the secondary compression stage.

18. The fuel cell apparatus of claim 16, wherein an air inlet of the first compressor is pneumatically connected to an air inlet of the second compressor, and an air outlet of the first compressor and an air outlet of the second compressor are both pneumatically connected to an air inlet of the secondary compression stage.

19. The fuel cell apparatus of claim 15, wherein the primary compression stage comprises a first compressor, a second compressor, a third compressor and a fourth compressor, the first compressor and the second compressor driven by a first motor, the third compressor and the fourth compressor driven by a second motor.

20. The fuel cell apparatus of claim 19, wherein an air outlet of the first compressor is pneumatically connected to an air inlet of the second compressor; an air outlet of the third compressor is pneumatically connected to an air inlet of the fourth compressor; and an air outlet of the second compressor and an air outlet of the fourth compressor are both pneumatically connected to an air inlet of the secondary compression stage.
